# EUROPEAN PATENT APPLICATION

(11) **EP 4 369 484 A1**
(43) Date of publication of application: **15.05.2024**
(21) Application number: 22878960.8
(22) Date of filing: 07.10.2022
(51) Int. Cl.: H01M 50/129, H01M 50/143, H01M 50/105, A62D 1/00

(54) **POUCH-TYPE BATTERY CASE AND SECONDARY BATTERY COMPRISING SAME**

(30) Priority: 08.10.2021 KR 20210134413
(71) Applicant: LG Energy Solution, Ltd., Seoul 07335 (KR)
(72) Inventor: KIM, Sung Gyu, Daejeon 34122 (KR)
(74) Representative: Plasseraud IP
(86) International application number: PCT/KR2022/015158
(87) International publication number: WO 2023/059139

(57) **Abstract**

A pouch-type batter case according to an embodiment of the present invention include: a barrier layer having a metal material; an inner polymer disposed inside the barrier layer and having a first polymer material; an outer polymer disposed outside the barrier layer and having a second polymer material; an extinguishing coating layer disposed at one side of the barrier layer and including a plurality of capsules in which an extinguishing agent is contained; and a protection layer disposed inside the extinguishing coating layer.

## Description

### TECHNICAL FIELD

### CROSS-REFERENCE TO RELATED APPLICATION

The present application claims the benefit of the priority of Korean Patent Application No. 10-2021-0134413, filed on October 08, 2021, which is hereby incorporated by reference in its entirety.

### TECHNICAL FIELD

The present invention relates to a pouch-type battery case and a secondary battery including the same.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

A secondary battery includes an electrode assembly and a battery case accommodating the electrode assembly. In addition, the electrode assembly includes a positive electrode and a negative electrode, which are alternately stacked on each other with a separator interposed therebetween. Particularly, the positive electrode is prepared by applying positive electrode active material slurry to a positive electrode collector, and the negative electrode is prepared by applying negative electrode active material slurry to a negative electrode collector.

When the secondary battery abnormally operates due to exposure of the secondary battery at a high temperature, the internal short circuit, the external short circuit, the overcharge, the overdischarge, or the like, possibility of the short circuit (short) increases due to contact between a positive electrode and a negative electrode while a separator is contracted due to heat generated as an organic electrolyte is decomposed. When rapid electron transfer inside the battery occurs due to the short circuit, the secondary battery is exploded, and fire occurs to cause a safety problem. In particular, when an electrical malfunction such as the overcharge, the overdischarge, or the external short circuit occurs, since high current flows, and thermal conductivity of a collector is low, the collector generates heat having a temperature higher than that of the active material layer. Therefore, when the heat is diffused, a positive electrode active material including metal oxide is decomposed and recrystallized, and a flammable gas including oxygen is generated to lead to larger explosion.

Particularly, since the secondary battery is generally used by integrating a plurality of battery cells into a modules or pack, there is a risk of causing large-scale fire if fire occurs in any one battery cell. Therefore, technology development for extinguishment of secondary batteries is required.

### DISCLOSURE OF THE INVENTION

### TECHNICAL PROBLEM

One aspect of the present invention for solving the above problem is to provide a pouch-type battery case capable of preventing fire from being spread by using an extinguishing capsule, and a secondary battery including the same.

Another object of the present invention for solving the above problem is to provide a pouch-type battery case capable of preventing an extinguishing capsule from being burst due to a simple increase in internal temperature, and a secondary battery including the same.

### TECHNICAL SOLUTION

A pouch-type batter case according to an embodiment of the present invention include: a barrier layer having a metal material; an inner polymer layer disposed inside the barrier layer and having a first polymer material; an outer polymer layer disposed outside the barrier layer and having a second polymer material; an extinguishing coating layer disposed at one side of the barrier layer and including a plurality of capsules in which an extinguishing agent is contained; and a protection layer disposed inside the extinguishing coating layer.

The extinguishing coating layer may be disposed outside the barrier layer, and the protection layer may be disposed between the extinguishing coating layer and the barrier layer.

The extinguishing coating layer may be disposed inside the barrier layer, and the protection layer may be disposed between the extinguishing coating layer and the inner polymer layer.

Each of the capsules of the extinguishing coating layer may be burst at a first temperature, and the protection layer may be melted at a second temperature higher than the first temperature.

Each of the capsules of the extinguishing coating layer may be burst at a temperature of 120 degrees Celsius to 130 degrees Celsius, and the protection layer may be melted at a temperature of 150 degrees Celsius to 250 degrees Celsius.

The protection layer may have a thickness less than that of the extinguishing coating layer.

The protection layer may have a thickness that is less than 1/100 that of the extinguishing coating layer.

Each of the capsules of the extinguishing coating layer may have a diameter of 50 um to 300 pm.

The extinguishing agent contained in each of the capsules may include fluoroketone.

A secondary battery according to an embodiment of the present invention include: an electrode assembly; and a pouch-type battery case in which the electrode assembly is accommodated. At least a portion of the pouch-type battery case may include: a barrier layer having a metal material; an inner polymer layer disposed inside the barrier layer and having a first polymer material; an outer polymer layer disposed outside the barrier layer and having a second polymer material; an extinguishing coating layer disposed at one side of the barrier layer and including a plurality of capsules in which an extinguishing agent is contained; and a protection layer disposed inside the extinguishing coating layer.

The extinguishing coating layer and the protection layer may not be provided in a sealing part of the pouch-type battery case.

### ADVANTAGEOUS EFFECTS

According to the preferred embodiment of the present invention, the extinguishing agent may be contained in the capsule provided in the extinguishing coating layer, and thus, when the extinguishing coating layer reaches the specific temperature, the capsule may be burst. Therefore, the fire occurring inside or outside the secondary battery may be prevented from being spread or transferred.

In addition, the protection layer may be provided inside the extinguishing coating layer to allow the temperature increasing of the extinguishing coating layer by the heat generation of the electrode assembly to be delayed. Therefore, the capsule of the extinguishing coating layer may be prevented from being burst due to the heat generated during the normal operation such as the charging and discharging of the electrode assembly.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is an assembly view of a secondary battery according to an embodiment of the present invention.
FIG. 2 is a cross-sectional view of the secondary battery according to an embodiment of the present invention.
FIG. 3 is a cross-sectional view of a pouch-type battery case according to an embodiment of the present invention.
FIG. 4 is a cross-sectional view of a pouch-type battery case according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

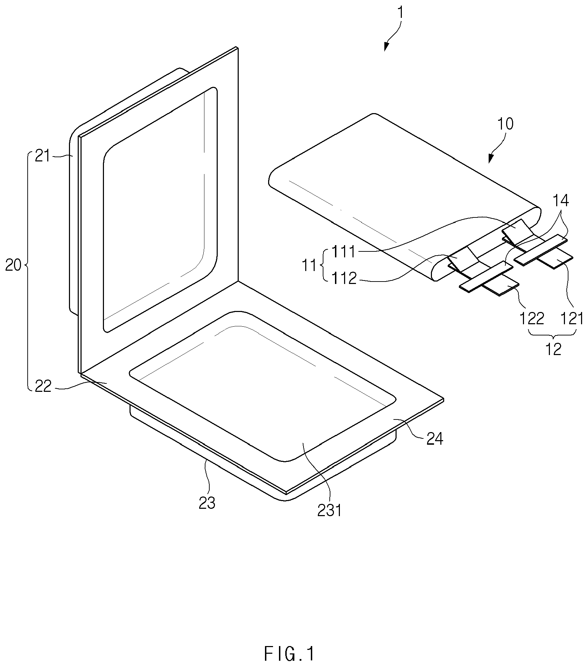

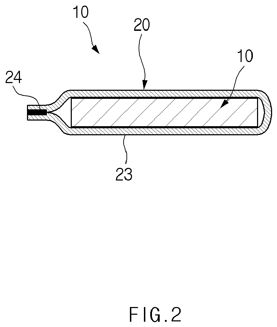

FIG. 1 is an assembly view of a secondary battery according to an embodiment of the present invention, and FIG. 2 is a cross-sectional view of the secondary battery according to an embodiment of the present invention.

As illustrated in FIG. 1, a pouch-type secondary battery 1 according to an embodiment of the present invention may include an electrode assembly 10, in which a positive electrode, a separator, a negative electrode are stacked, and a pouch-type battery case 20 (hereinafter, referred to as a 'battery case') accommodating the electrode assembly 10.

The electrode assembly 10 may be a stacked structure including two types of electrodes such as a positive electrode and a negative electrode and a separator disposed between the electrodes to insulate the electrodes from each other or disposed at a left or right side of one electrode. The stacked structure may have various shapes without being limited in shape. For example, the cathode and the anode, each of which has a predetermined standard, may be stacked with the separator therebetween, or the stacked structure may be wound in the form of a jelly roll. Each of the two types of electrodes, i.e., the positive electrode and the negative electrode may have a structure in which active material slurry is applied to the electrode collector having a metal foil or metal mesh shape. The positive electrode collector may include an aluminum material, and the negative electrode collector may include a copper material. The active material slurry may be typically formed by stirring a granular active material, an auxiliary conductor, a binder, a plasticizer, and the like in a state in which a solvent is added, and the solvent may be removed in a subsequent process.

A plurality of electrode tabs 11 may be provided in the electrode assembly 10, and the electrode tabs 11 may protrude to the outside of the electrode assembly 10 to act as a path through which electrons move between the inside and outside of the electrode assembly 10.

In more detail, the electrode collector of each electrode provided in the electrode assembly 10 may include a portion coated with the electrode active material and an end that is not coated with the electrode active material, that is, a non-coating portion. Also, each of an electrode tabs 11 may be formed by cutting the non-coating portion or by connecting a separate conductive member to the non-coating portion through ultrasonic welding.

The plurality of electrode tabs 11 may include a positive electrode tab 111 connected to the positive electrode and a negative electrode tab 112 connected to the negative electrode. The positive electrode tab 111 and the negative electrode tab 112 may protrude from one side of the electrode assembly 10 in the same direction, but the present invention is not limited thereto. For example, the positive and negative electrode tabs 111 and 112 may protrude in directions different from each other.

A lead 12 may be connected to the electrode tab 11 of the electrode assembly 10 through spot welding. In addition, a portion of the lead 12 may be surrounded by an insulating part 14. The insulating part 14 may be disposed to be limited within a sealing part 24, at which an upper case 21 and a lower case 22 are thermally fused, so as to be bonded to the battery case 20. In addition, electricity generated from the electrode assembly 10 may be prevented from flowing to the battery case 20 through the lead 12, and the sealing of the battery case 20 may be maintained. Thus, the insulating part 14 may be made of a nonconductive material having non-conductivity, which is not electrically conductive. In general, although an insulation tape which is easily attached to the lead 12 and has a relatively thin thickness is used as the insulating part 14, the present invention is not limited thereto. For example, various members may be used as the insulating part 14 as long as the members are capable of insulating the lead 12.

The leads 12 may include a positive electrode lead 121 having one end connected to the positive electrode tab 111 to extend in a direction in which the positive electrode tab 111 protrudes and a negative electrode lead 122 having one end connected to the negative electrode tab 112 to extend in a direction in which the negative electrode tab 112 protrudes. In addition, ends of the positive electrode lead 121 and the negative electrode lead 122 may protrude outside the battery case 20 to supply electricity generated inside the electrode assembly 10 to the outside. That is, the end of the lead 12 protruding out of the battery case 20 may be electrically connected to an external terminal.

The positive electrode lead 121 and the negative electrode lead 122 may be made of materials different from each other. In more detail, the positive electrode lead 121 may be made of the same material as the positive electrode collector, i.e., an aluminum (Al) material, and the negative electrode lead 122 may be made of the same material as the negative electrode collector, i.e., a copper (Cu) material or a copper material coated with nickel (Ni).

The battery case 20 may be a pouch made of a flexible material and may accommodate and seal the electrode assembly 10 so that the end of the lead 12 is exposed. The battery case 20 may include an upper case 21 and a lower case 22. An accommodation space 231 in which a cup part 23 is formed to accommodate the electrode assembly 10 may be provided in the lower case 22, and upper case 21 may cover an upper side of the accommodation space 231 so that the electrode assembly 10 is not separated to the outside of the battery case 20. Here, the cup part 23 having the accommodation space 231 may be formed in the upper case 21 to accommodate the electrode assembly 10 in the upper portion. However, the present invention is not limited thereto. For example, a cup part 23 may be formed in only the lower case 22, i.e., may be formed in various positions. Also, one side of the upper case 21 and one side of the lower case 22 may be connected to each other, but the present invention is not limited thereto. For example, the upper case 131 and the lower case 132 may be separately manufactured to be separated from each other.

When the lead 12 is connected to the electrode tab 11 of the electrode assembly 10, and the insulating part 14 is provided on a portion of the lead 12, the electrode assembly 10 may be accommodated in the accommodation space 231 provided in the cup part 23 of the lower case 22, and the upper case 21 may cover the electrode assembly 10 at the upper side. Also, an electrolyte is injected into the accommodation space 231, and the sealing part 24 formed on edges of the upper case 21 and the lower case 22 may be sealed. The electrolyte may move lithium ions generated by electrochemical reaction of the electrode during charging and discharging of the secondary battery 1. The electrolyte may include a non-aqueous organic electrolyte that is a mixture of a lithium salt and a high-purity organic solvent or a polymer using a polymer electrolyte. By the above method, the secondary battery 1 may be manufactured through the above-described method.

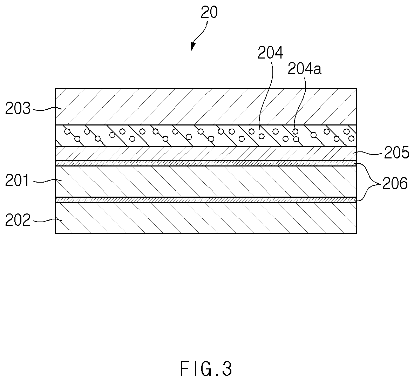

FIG. 3 is a cross-sectional view of the pouch-type battery case according to an embodiment of the present invention.

As described above, the battery case 20 according to an embodiment of the present invention may accommodate the electrode assembly 10, and when fire occurs in the electrode assembly 10, or fire is transferred from the outside, the fire may be quickly extinguished.

In more detail, the battery case 20 may include a barrier layer 201, an inner polymer layer 202, an outer polymer layer 203, an extinguishing coating layer 204, and a protection layer 205. The battery case 20 may further include an adhesive layer 206.

The battery case 20 may be manufactured by drawing and molding the cup part 23 on a pouch film. That is, the pouch film, which is a base material of the battery case 20, may be a lamination sheet including the barrier layer 201, the inner polymer layer 202, the outer polymer layer 203, the extinguishing coating layer 204, and the protection layer 205.

The barrier layer 201 may secure mechanical strength of the battery case 20, block introduction and discharge of a gas or moisture outside the secondary battery 1, and prevent the electrolyte from leaking. The barrier layer 201 may include a metal material, and preferably, an aluminum thin film (Al foil) may be used. This is done because aluminum secures mechanical strength having a predetermined level or more, but is light in weight and also secures complement and heat dissipation for electrochemical properties due to the electrode assembly 10 and the electrolyte.

However, the present invention is not limited thereto. For example, the barrier layer 201 may be made of various materials. For example, the barrier layer 201 may include one or more materials selected from the group consisting of Fe, C, Cr, Mn, Ni, and Al.

The inner polymer layer 202 may include a first polymer material and may be disposed inside the barrier layer 201. Here, the inner side may mean a side closer to the electrode assembly 10 based on the barrier layer 201. Since the inner polymer layer 202 is in direct contact with the electrode assembly 10, the inner polymer layer 202 may have to have insulating properties. In addition, since the inner polymer layer 202 is in contact with the electrolyte, the inner polymer layer 202 may have to have corrosion resistance. Also, since the inner polymer layer 202 completely seals the inside of the secondary battery 1 to block movement of the material between the inside and the outside, the inner polymer layer 202 may have high sealability. That is, the sealing part 2 in which the inner polymer layers 202 are bonded to each other has to have superior bonding strength.

A first polymer material contained in the inner polymer layer 202 may be one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the inner polymer layer 202 may include a polyolefin-based resin such as polypropylene (PP) or polyethylene (PE). Polypropylene (PP) may be excellent in mechanical properties such as tensile strength, rigidity, surface hardness, abrasion resistance, and heat resistance and chemical properties such as corrosion resistance and thus may be mainly used for manufacturing the inner polymer layer 202.

The outer polymer layer 203 may be made of a second polymer and disposed outside the barrier layer 201 to protect the secondary battery 1 against external friction and collision and also electrically insulate the electrode assembly 10 from the outside. Here, the outside may mean an opposite side of the electrode assembly 10 based on the barrier layer 201.

The second polymer material contained in outer polymer layer 203 may be one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the outer polymer layer 203 may include a nylon resin or polyethylene terephthalate (PET) having wear resistance and heat resistance.

In addition, each of the inner polymer layer 202 and the outer polymer layer 203 may have a single layer structure made of any one material or a composite layer structure formed by forming two or more materials.

In this embodiment, the extinguishing coating layer 204 may be disposed outside the barrier layer 201. In more detail, the extinguishing coating layer 204 may be applied on an inner surface of the outer polymer layer 203.

The extinguishing coating layer 204 may have a plurality of capsules 204a containing an extinguishing agent. In more detail, the plurality of capsules 204a may be provided inside the extinguishing coating layer 204.

The extinguishing coating layer 204 may contain a binder so as to be easily applied to the inner surface of the outer polymer layer 203. The extinguishing coating layer 204 may be applied on the inner surface of the outer polymer layer 203 in a liquid state in which the plurality of capsules 204a are mixed and then cured.

The inner surface of the outer polymer layer 203 may refer to a surface facing the inside of the secondary battery 1, that is, a surface facing the electrode assembly 10 on both surfaces of the outer polymer layer 203. Those skilled in the art will be able to easily understand that the 'inner surface' is used in the same sense for other layers than the outer polymer layer 203.

Each of the capsules 204a may contain the extinguishing agent. When the capsule 204b is burst due to high-temperature heat, the extinguishing agent may prevent fire occurring inside and outside the electrode assembly 10 from being spread.

A material used as the extinguishing agent is not limited, and a person skilled in the art may select an appropriate material. For example, the extinguishing agent may be a fluoroketone, more specifically, may be fluoroketone having a chemical structure of CF₃CF₂C(=O)CF(CF₃)₂. As another example, the extinguishing agent may be at least one material selected from the group consisting of sodium bicarbonate, potassium hydrogen carbonate, and ammonium phosphate.

The capsule 204b may be configured to be burst when a predetermined first temperature is reached, and the material of the capsule for this purpose may be appropriately selected. For example, the first temperature may be 120 degrees Celsius to 130 degrees Celsius, and in this case, a melting point of the material constituting the capsule 204b may be 120 degrees Celsius to 130 degrees Celsius. Therefore, when the extinguishing coating layer 204 reaches the first temperature due to the fire occurring inside or outside the secondary battery 1, the capsule 204b may be burst so that the extinguishing agent is discharged to the outside to prevent the fire from being spread.

The capsule 204 may be a microcapsule and may have a diameter of 50 um to 300 um. In addition, in order to prevent the overall thickness of the battery case 20 from excessively increasing, the extinguishing coating layer 204 may have a thickness of about 1 mm. In this regard, when the diameter of the capsule 204 is less than 50 µm, it is difficult to manufacture the capsule 204, and an amount of extinguishing agent is reduced, resulting in a decrease in the extinguishing effect. In addition, when the diameter of the capsule 204 is greater than 300 µm, the coating of the extinguishing coating layer 204 may be difficult, or the thickness of the extinguishing coating layer 204 may excessively increase.

The protection layer 205 may be disposed inside the extinguishing coating layer 204. In more detail, the protection layer 205 may be disposed between the extinguishing coating layer 204 and the barrier layer 201.

The protection layer 205 may delay the bursting of a capsule 204b of the extinguishing coating layer 204 by heat generated inside the secondary battery 1. In more detail, the electrode assembly 10 (see FIG. 2) accommodated in the battery case 20 may generate heat during charging and discharging, and the protection layer 205 may prevent a capsule 204a of the extinguishing coating layer 204 from being burst by the heat generated during a normal operation of the electrode assembly 10.

Thus, the protection layer 205 may be configured to be melted when reaching a predetermined second temperature, and the second temperature may be higher than the first temperature at which the capsule 204b is burst. The material of the protection layer 205 for this purpose may be appropriately selected.

For example, the second temperature may be 150 degrees Celsius to 250 degrees Celsius, and in this case, a melting point of the material constituting the protection layer 205 may be 150 degrees Celsius to 250 degrees Celsius. In addition, as described above, the first temperature at which the capsule 204b is burst may be 120 degrees Celsius to 130 degrees Celsius.

Therefore, even if the protection layer 205 reaches the first temperature due to a simple increase in an internal temperature of the secondary battery 1, the capsule 204a of the extinguishing coating layer 204 may not be burst.

On the other hand, when the fire occurs outside the secondary battery 1, the extinguishing coating layer 204 may quickly reach the first temperature, and thus, the capsule 204a may be burst. As a result, the extinguishing agent may be activated to prevent the fire from being transferred to the electrode assembly 10.

In addition, when the fire occurs inside the secondary battery 1, that is, in the electrode assembly 10, the protection layer 205 may reach the second temperature and be melted, and thus, the capsule 204a of the extinguishing coating layer 204 may be burst to activate the extinguishing agent. Thus, it is possible to prevent the fire from being transferred to the outside of the secondary battery 1.

The protection layer 205 may have thermal insulating properties greater than those of the barrier layer 201 and the inner polymer layer 202.

The thickness of the protection layer 205 may be less than the thickness of the extinguishing coating layer 204. In more detail, the thickness of the protection layer 205 may be less than 1/100 the thickness of the extinguishing coating layer 204. For example, the thickness of the extinguishing coating layer 204 may be approximately 1 mm or less, and the thickness of the protection layer 205 may be 10 um or less. When the thickness of the protection layer 205 is greater than 10 µm, the thickness of the battery case 20 may excessively increase, and thus, energy density of the secondary battery 1 may be reduced.

The protection layer 205 may be formed by UV-curing an insulating solution printed on the inner surface of the extinguishing coating layer 204. For example, the protection layer 205 may be formed by printing and curing a polyethylene terephthalate (PET) solution. However, the manufacturing process and material of the protection layer 205 are not limited thereto and may vary as necessary.

A pair of adhesive layers 206 may be provided. In the pair of adhesive layers 206, one adhesive layer 206 may bond the barrier layer 201 and the protection layer 205 to each other, and the other adhesive layer 206 may bond the barrier layer 201 and the inner polymer layer 202 to each other. In more detail, the one adhesive layer 206 may be disposed between the outer surface of the barrier layer 201 and the inner surface of the protection layer 205, and the other adhesive layer 206 may be disposed between the inner surface of the barrier layer 201 and the outer surface of the inner polymer layer 202. However, it is not limited thereto, and it is of course possible that the battery case 20 includes only a single adhesive layer 206.

The adhesive layer 206 may be formed by curing an adhesive, but is not limited thereto.

The extinguishing coating layer 204 and the protection layer 205 may be provided in at least a portion of the battery case 20, more specifically, at least a portion of the cup part 23. In addition, the extinguishing coating layer 204 and the protection layer 205 may not be provided in the sealing portion 24 (see FIG. 2). This is because the extinguishing coating layer 204 and the protection layer 205 are configured for extinguishing the fire occurring in the electrode assembly 10 or preventing the fire occurring outside the secondary battery 1 from transferring to the electrode assembly 10. Therefore, even if the sealing part 24 does not include the extinguishing coating layer 204 and the protection layer 205, there is no problem in performing the extinguishing function, rather, for reducing a raw material for manufacturing the extinguishing coating layer 204 and the protection layer 205 to reduce manufacturing costs.

However, for ease of manufacturing of the battery case 20, it is also possible that the extinguishing coating layer 204 and the protection layer 205 are provided in the entire battery case 20.

Hereinafter, a method of manufacturing a battery case 20 according to this embodiment will be briefly described.

The method for manufacturing the battery case 20 may include a process of applying an extinguishing coating layer 204 provided with a capsule 204a to an inner surface of an outer polymer layer 203 and a process of printing and curing an insulating solution on an inner surface of the extinguishing coating layer 204 to form a protection layer 205. Thus, a composite layer in which the outer polymer layer 203, the extinguishing coating layer 204, and the protection layer 205 are stacked may be prepared.

The method for manufacturing the battery case 20 may further include a process of bonding the protection layer 205 of the composite layer on an outer surface of a barrier layer 201 and bonding an inner polymer layer 202 on an inner surface of the barrier layer 201. Here, an adhesive may be applied between the barrier layer 201 and the protection layer 205 and between the barrier layer 201 and the inner polymer layer 202 to form an adhesive layer 206.

Thus, a pouch film, which is a base material of the battery case 20, may be prepared, and the battery case 20 may be manufactured by molding a cup part 23 (see FIG. 1) on the pouch film.

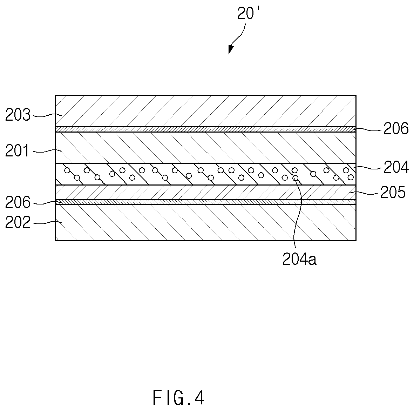

FIG. 4 is a cross-sectional view of a battery case according to another embodiment of the present invention.

Hereinafter, contents duplicated with those of the foregoing embodiment will be omitted, and differences will be mainly described.

In a battery case 20' according to this embodiment, an extinguishing coating layer 204 may be disposed inside a barrier layer 201. In more detail, the extinguishing coating layer 204 may be applied on an inner surface of the barrier layer 201.

An extinguishing coating layer 204 may contain a binder so as to be easily applied to the inner surface of the barrier layer 201. The extinguishing coating layer 204 may be applied on the inner surface of the barrier layer 201 in a liquid state in which a plurality of capsules 204a are mixed and then cured. Therefore, an adhesive layer may not be provided between the barrier layer 201 and the extinguishing coating layer 204.

The protection layer 205 may be disposed inside the extinguishing coating layer 204. In more detail, the protection layer 205 may be disposed between the extinguishing coating layer 204 and the inner polymer layer 202.

A pair of adhesive layers 206 may be provided. In the pair of adhesive layers 206, one adhesive layer 206 may bond the barrier layer 201 and an outer polymer layer 203 to each other, and the other adhesive layer 206 may bond the protection layer 201 and the inner polymer layer 202 to each other. In more detail, the one adhesive layer 206 may be disposed between the outer surface of the barrier layer 201 and the inner surface of the outer polymer layer 203, and the other adhesive layer 206 may be disposed between the inner surface of the protection layer 205 and the outer surface of the inner polymer layer 202. However, it is not limited thereto, and it is of course possible that the battery case 20 includes only a single adhesive layer 206.

Hereinafter, a method of manufacturing a battery case 20' according to this embodiment will be briefly described.

The method for manufacturing the battery case 20' may include a process of applying an extinguishing coating layer 204 provided with a capsule 204a to an inner surface of a barrier layer 201 and a process of printing and curing an insulating solution on an inner surface of the extinguishing coating layer 204 to form the protection layer 205. Thus, a composite layer in which the barrier layer 201, the extinguishing coating layer 204, and the protection layer 205 are stacked may be prepared.

The method for manufacturing the battery case 20' may further include a process of bonding the protection layer 205 of the composite layer on an outer surface of an inner polymer layer 202 and bonding an outer polymer layer 203 on an inner surface of the barrier layer 201 of the composite layer. Here, an adhesive may be applied between the inner polymer layer 201 and the protection layer 205 and between the barrier layer 201 and the outer polymer layer 203 to form an adhesive layer 206.

Thus, a pouch film, which is a base material of the battery case 20, may be prepared, and the battery case 20 may be manufactured by molding a cup part 23 (see FIG. 1) on the pouch film.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

### [Description of the Symbols]

| | | | |
|---|---|---|---|
| 1: | Secondary battery | 10: | Electrode assembly |
| 20: | Pouch-type battery case | 23: | Cup part |
| 24: | Sealing part | 201: | Barrier layer |
| 202: | Inner polymer layer | 203: | Outer polymer layer |
| 204: | Extinguishing coating layer | 204a: | Capsule |
| 205: | Protection layer | 206: | Adhesive layer |

## Claims

1. A pouch-type batter case comprising:
a barrier layer having a metal material;
an inner polymer layer disposed inside the barrier layer and having a first polymer material;
an outer polymer layer disposed outside the barrier layer and having a second polymer material;
an extinguishing coating layer disposed at one side of the barrier layer and comprising a plurality of capsules in which an extinguishing agent is contained; and
a protection layer disposed inside the extinguishing coating layer.

2. The pouch-type batter case of claim 1, wherein the extinguishing coating layer is disposed outside the barrier layer, and
the protection layer is disposed between the extinguishing coating layer and the barrier layer.

3. The pouch-type batter case of claim 1, wherein the extinguishing coating layer is disposed inside the barrier layer, and
the protection layer is disposed between the extinguishing coating layer and the inner polymer layer.

4. The pouch-type batter case of claim 1, wherein each of the capsules of the extinguishing coating layer is burst at a first temperature, and
the protection layer is melted at a second temperature higher than the first temperature.

5. The pouch-type batter case of claim 1, wherein each of the capsules of the extinguishing coating layer is burst at a temperature of 120 degrees Celsius to 130 degrees Celsius, and
the protection layer is melted at a temperature of 150 degrees Celsius to 250 degrees Celsius.

6. The pouch-type batter case of claim 1, wherein the protection layer has a thickness less than that of the extinguishing coating layer.

7. The pouch-type batter case of claim 1, wherein the protection layer has a thickness that is less than 1/100 that of the extinguishing coating layer.

8. The pouch-type batter case of claim 1, wherein each of the capsules of the extinguishing coating layer has a diameter of 50 um to 300 µm.

9. The pouch-type batter case of claim 1, wherein the extinguishing agent contained in each of the capsules comprises fluoroketone.

10. A secondary battery comprising:
an electrode assembly; and
a pouch-type battery case in which the electrode assembly is accommodated,
wherein at least a portion of the pouch-type battery case comprises:
a barrier layer having a metal material;
an inner polymer layer disposed inside the barrier layer and having a first polymer material;
an outer polymer layer disposed outside the barrier layer and having a second polymer material;
an extinguishing coating layer disposed at one side of the barrier layer and comprising a plurality of capsules in which an extinguishing agent is contained; and
a protection layer disposed inside the extinguishing coating layer.

11. The secondary battery of claim 10, wherein the extinguishing coating layer and the protection layer are not provided in a sealing part of the pouch-type battery case.
